**Europäisches Patentamt**

**European Patent Office**

**Office européen des brevets**

(19)

(11) Publication number: **0 334 389**
**A2**

## EUROPEAN PATENT APPLICATION

(12)

(21) Application number: **89107296.9**

(22) Date of filing: **19.07.84**

(51) Int. Cl.4: **E21B 33/03 , F16J 15/48 , F16J 15/14**

(30) Priority: **19.07.83 CA 432780**

(43) Date of publication of application:
**27.09.89 Bulletin 89/39**

(60) Publication number of the earlier application in accordance with Art.76 EPC: **0 132 159**

(84) Designated Contracting States:
**AT DE GB IT**

(71) Applicant: **BRALORNE RESOURCES LIMITED**
**2900 - 205 - 5th Avenue S.W.**
**Calgary Alberta T2P 2V7(CA)**

(72) Inventor: **Johnson, Clarence William**
**1815 Palliser Drive S.W.**
**Calgary Alberta(CA)**

(74) Representative: **Purvis, William Michael**
**Cameron et al**
**D. Young & Co. 10 Staple Inn**
**London WC1V 7RD(GB)**

(54) **Wellhead seals.**

(57) A wellhead sealing system comprises a casing (12), a tubing spool (16) and a bushing (22) between the casing (12) and the tubing spool (16). A first recess (24) is provided in the bushing (22) and a first casing seal (23) is mounted therein to act between the bushing (22) and the casing (12). A second recess (26) is provided in the tubing spool (16) and a first bushing seal (25) is mounted therein to act between the tubing spool (16) and the bushing (22). The casing seal (23) has cylindrical inside (27) and outside (28) surfaces located generally at the inside and outside diameters of the seal (23). The cylindrical inside surface (27) is defined by a radially inwardly extending convex central protuberance (29) and opposed cylindrical flat surface areas (30) extending axially outwardly from the convex central protuberance (29) into first transition areas (31) extending to respective end surfaces (32). The cylindrical outside surface (28) is defined by a circumferential centrally located groove (33) flanked by axially outwardly extending flexible retaining flanges (34) forming second transition areas between the cylindrical outside surface (28) and the end surfaces (32). Spring means (35) extend around the inside circumference of the seal and are located adjacent each of the first transition areas (31).

FIGURE 2

FIGURE 3

## WELLHEAD SEALS

The invention relates to wellhead seals and, more particularly, to wellhead seals used between tubing, well casing and the inside diameters of wellhead fittings.

Casing is used when drilling wells to prevent the drill hole from caving and to preclude undesirable formation fluid movement in the surrounding rock strata. The casing is hung from a casing hanger mounted in a casing head. A "primary" seal is used in the casing hanger to seal and prevent fluid flow between the outside of the casing and the casing head.

The casing continues upwardly from the casing head and is terminated by cutting at an optimal location. The cut end of the casing is generally bevelled to remove sharp edges. Thereafter, a tubing spool is inserted over the end of the casing and attached to the casing head.

Tubing in the well acts as a conduit for the oil, gas or water of the well. It extends from the bottom of the well within the casing and upwardly a distance from the top of the cut casing. A tubing hanger is threaded on the tubing and mounted in the tubing spool. A mating bonnet is connected to the upper end of the tubing spool.

To seal the contents of the well from the primary seal between the casing and the casing head, seals additional to the primary seal are used between the tubing spool and the casing. These seals are known as "secondary" seals. Seals are also used between the tubing hanger and the mating bonnet to prevent fluid flow therebetween.

Problems with existing seals have arisen for various reasons. In one secondary seal, "double-lipped" seals in a "dog bone" type shape are used. If the end of the casing is not well bevelled or if considerable installation care is not taken, lips of the secondary seal in the tubing spool or in a bushing mounted within the tubing spool may contact the bevelled end of the casing and be damaged or jammed into the corner of the seal retaining recess and protrude into the space between the outside of the casing and the inside of the bushing. This protrusion of the lips may prevent further assembly or the lips themselves may be sheared off when the assembly is forced.

In another type of secondary seal, the seal is formed for axial pressure between the casing and the bushing only by pressurizing the outer circumferential surface with a viscous plastics fluid injection. Further, such seals cannot convey the viscous fluid through the seal to another seal situated at a radially inwardly location.

Patent Specification GB-A-2 099 046 discloses a casing seal in a bushing recess, the casing seal having cylindrical inside and outside surfaces located generally on the inside and outside diameters of the seal with the cylindrical outside surface defined by a circumferentially centrally located groove flanked by outwardly extending flanges.

According to one aspect of the invention, there is provided a wellhead sealing system comprising a casing, a tubing spool around the casing, a bushing between the tubing spool and the casing, a first bushing recess, a first tubing spool recess, a first casing seal in the bushing recess and a first bushing seal in the tubing spool recess;
characterised in that the first casing seal has an outside surface located generally at the outside diameter of the casing seal;
axially outwardmost backup rings having axially outwardly located end surfaces, said end surfaces being defined by a first bevelled portion extending radially inwardly and axially outwardly from the outside surface of the casing seal to an axially outwardmost portion of said end surfaces, a radially inwardly extending portion terminating adjacent the inside diameter of the tubing spool and a second bevelled portion extending radially and axially inwardly and terminating adjacent the outside diameter of the bushing;
flexible vee rings positioned axially inwardly of the back-up rings and extending between the outside diameters of the bushing recess and the bushing;
adaptor rings positioned axially inwardly of the flexible vee rings and having wedge shaped end surfaces adjacent the vee rings; and
a centrally located spacer ring positioned axially inwardly of the adaptor rings and having a series of radial peripheral passageways operable to allow injection of plastics material therethrough.

According to another aspect of the invention there is provided a wellhead seal characterised by cylindrical inside and outside surfaces located generally at the inside and outside diameters of the seal, respectively, and a radially inwardly extending convex central protuberance on the cylindrical inside surface between cylindrical flat surface areas which extend axially outwardly from the convex central protuberance into first transition areas extending to respective end surfaces, the cylindrical outside surface being defined by a circumferential centrally located groove flanked by axially outwardly extending flexible retaining flanges forming second transition areas between the cylindrical outside surface and the end surfaces.

According to a further aspect of the invention there is provided a wellhead seal characterised by an outside surface located generally at the outside diameter of the seal, a circumferential central recess, a radially open inwardly extending circumferential entrance area to the recess, and a plurality of radially extending peripheral passageways between the outside surface of the seal and the recess.

According to yet another aspect of the invention there is provided a wellhead seal characterised by:
an outside surface located generally at the outside diameter of the seal;
an inside surface located generally at the inside diameter of the seal;
back-up rings having axially outwardly located end surfaces, each end surface being defined by a first bevelled portion extending radially inwardly and axially outwardly from the outside surface of the seal to an axially outwardmost portion of the end surface, a radially inwardly extending portion extending inwardly from the termination of the first bevelled portion, and a second bevelled portion extending radially and axially from the termination of the portion to adjacent the inside diameter of the seal;
flexible vee rings positioned axially inwardly of the back-up rings and extending between the outside and inside diameters of the seal;
adaptor rings positioned axially inwardly of the flexible vee rings and having wedge shaped end surface adjacent the vee rings; and
a centrally located spacer ring positioned axially inwardly of the adaptor rings and having a series of radial peripheral passageways operable to allow injection of plastics material therethrough.

According to a still further aspect of the invention there is provided a wellhead sealing system characterised by a casing, a tubing spool around the casing, a tubing spool recess and a casing seal in the tubing spool recess, the casing seal comprising cylindrical inside and outside surfaces located generally at the inside and outside diameters of the seal, respectively, being defined by a radially inwardly extending convex central protuberance on the cylindrical inside surface between cylindrical flat surface areas which extend axially outwardly from the convex central protuberance into first transition areas extending to respective end surfaces, the cylindrical outside surface being defined by a circumferential centrally located groove flanked by axially outwardly extending flexible retaining flanges forming second transition areas between the cylindrical outside surface and the end surfaces.

According to a yet further aspect of the invention there is provided a wellhead sealing system comprising tubing, a tubing hanger connected to the tubing, a tubing spool supporting the tubing hanger, a mating bonnet mounted on the tubing spool, a mating bonnet recess, and a tubing hanger seal, the tubing hanger seal having an outside surface lcoated generally at the outside diameter of the seal, a circumferential central recess, a radially open inwardly extending circumferential entrance area to the recess, and a plurality of radially extending peripheral passageways between the outside surface of said seal and the recess.

The invention is diagrammatically illustrated by way of example with reference to the accompanying drawings in which:

Figure 1 is a diagrammatic partially cutaway cross-sectional view of a wellhead assembly including a wellhead sealing system according to the invention;

Figure 2 is a partial enlarged cross-sectional view of the hardware surrounding the top of the casing as shown in Figure 1;

Figure 3 is an enlarged cross-sectional view of the portion indicated at Area III in Figure 2;

Figure 4 is an enlarged cross-sectional view of the portion indicated at Area IV in Figure 2; and

Figure 5 is an enlarged cross-sectional view of an alternative embodiment of a casing seal, depicted in assembled form, of a wellhead sealing system according to the invention.

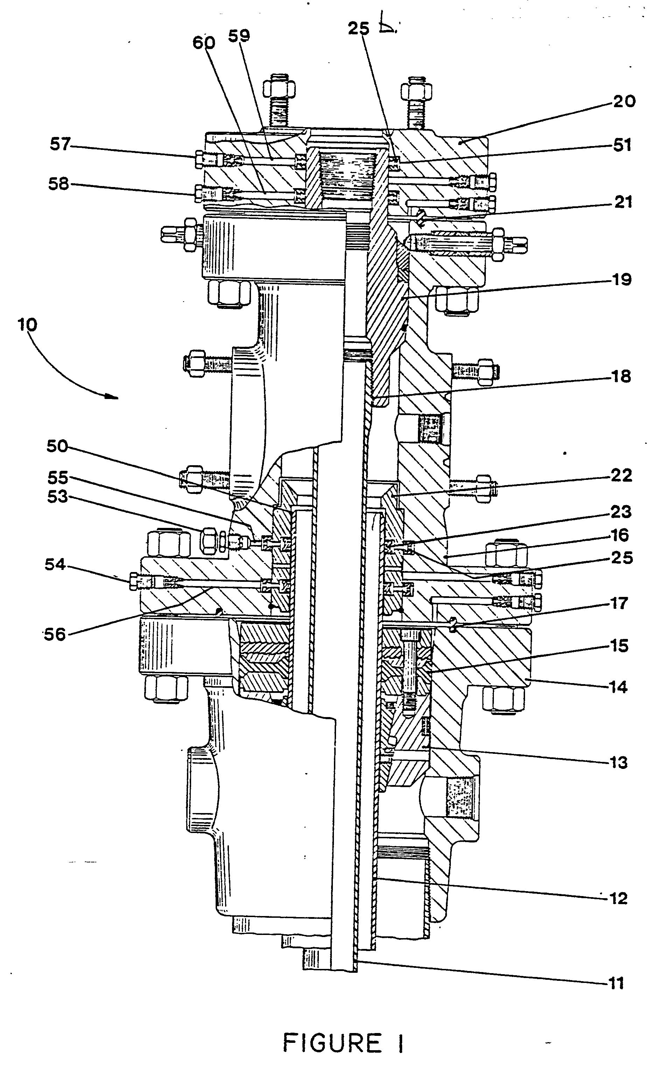

In the following description, it will be understood that the terms "radial", "axial", "inwardly", and "outwardly" are used with reference to the directions as viewed in Figure 1.

Referring to the drawings, a wellhead is shown generally at 10 in Figure 1. Tubing 11 and casing 12 extend upwardly from the drill hole into the wellhead 10. A large portion of the weight of the casing 12 is borne by a casing hanger generally denoted 13. The casing hanger 13 is mounted in a casing head 14 and a primary seal 15 seals between the casing 12 and the casing head 14.

A tubing spool 16 is mounted on the top of the casing head 14. A ring gasket 17 acts between the flanges of the tubing spool 16 and the casing head 14.

The tubing 11 has a threaded end portion 18 and a tubing hanger 19 is connected thereto and mounted in the upper end of the tubing spool 16. A mating bonnet 20 is connected to the tubing spool 16. A ring gasket 21 acts between the tubing hanger 19 and the mating bonnet 20.

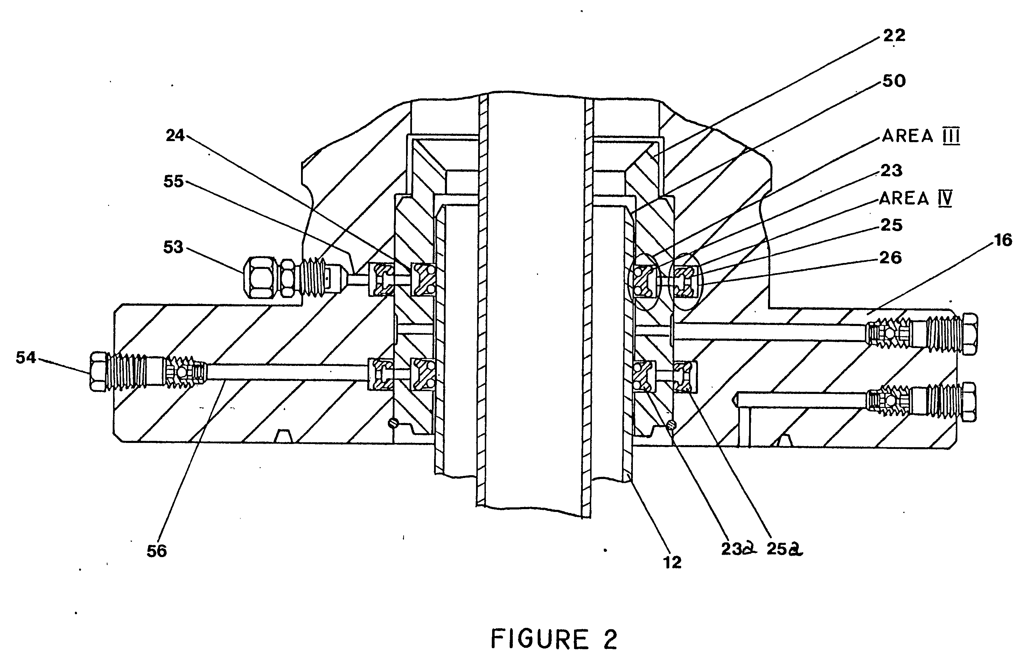

As more clearly shown in Figure 2, a bushing 22 is utilized when the outside diameter of the casing 12 is relatively smaller than the inside diameter of the tubing spool 16. The bushing 22 is mounted within the tubing spool 16 and is positioned between the casing 12 and the tubing spool 16. A first casing seal is shown generally at 23, is retained in a bushing recess 24 in the bushing 22 and acts between the bushing 22 and the casing 12. A first bushing seal is shown generally at 25, is retained in a tubing spool recess 26 in the tubing spool 16 and acts between the bushing 22 and the tubing spool 16. Both the first casing and the bushing seals 23, 25, respectively, are duplicated at a lower position by seals 23a, 25a in the bushing 22 and the tubing spool 16 respectively.

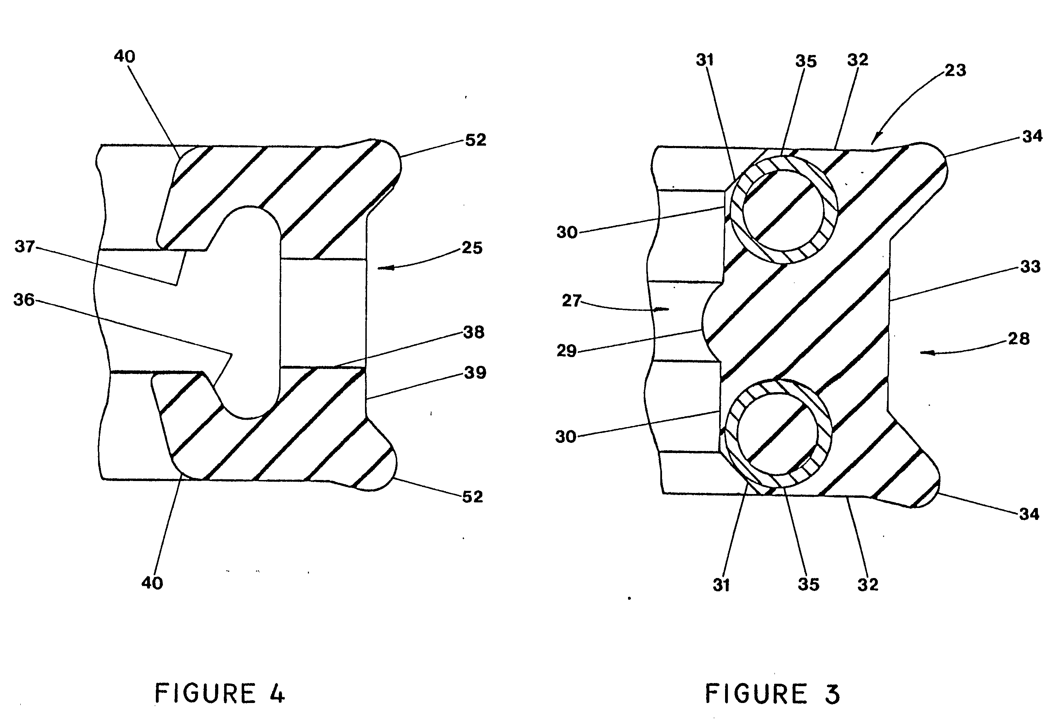

The first casing seal 23 is shown in more detail in Figure 3. It is known colloquially as a "garter spring" or "GS" type seal and is made from flexible elastomer material. The first casing seal 23 comprises cylindrical inside and outside surfaces shown generally at 27, 28, respectively, which surfaces are located generally at the inside and outside diameters of the first casing seal 23. The cylindrical inside surface 27 has a convex central protuberance 29 thereon which extends radially inwardly from the cylindrical inside surface 27. Cylindrical flat surface areas 30 each extend axially outwardly from the convex central protuberance 29 into first transition areas 31 which extend to respective end surfaces 32. The cylindrical outside surface 28 is defined by a circumferential centrally located groove 33 flanked by axially outwardly extending flexible retaining flanges 34 which form second transition areas between the circumferential centrally located groove 33 and the end surfaces 32.

A pair of spring means, namely coiled or "garter" springs 35 extend around the inside circumference of the first casing seal 23, one adjacent each of the first transition areas 31. The coiled springs 35 protect the first transition areas 31 and lend rigidity to the casing seal 23.

The first bushing seal 25 is shown in more detail in Figure 4. It is known colloquially as a "B" type seal and is also made from flexible elastomer material. The shape of the bushing seal 25 is generally similar to that of the casing seal 23 and both are interchangeable in the same recess. However, whereas the casing seal 23 has the convex central protuberance 29 on the cylindrical inside surface 27, the central portion of the bushing seal 25 is a circumferential central recess or cavity 36 with a radially open inwardly extending circumferential entrance area 37. A further difference between the casing seal 23 and the bushing seal 25 is that the bushing seal 25 has a plurality of radially extending peripheral passageways 38 between an outside surface 39 and the cavity 36 which allow for radial injection of plastic material when it is needed. Flexible retaining lips 40 extend axially outwardly from and flank the cavity 36 and flexible retaining flanges 52 are provided at the radially and axially outer corners.

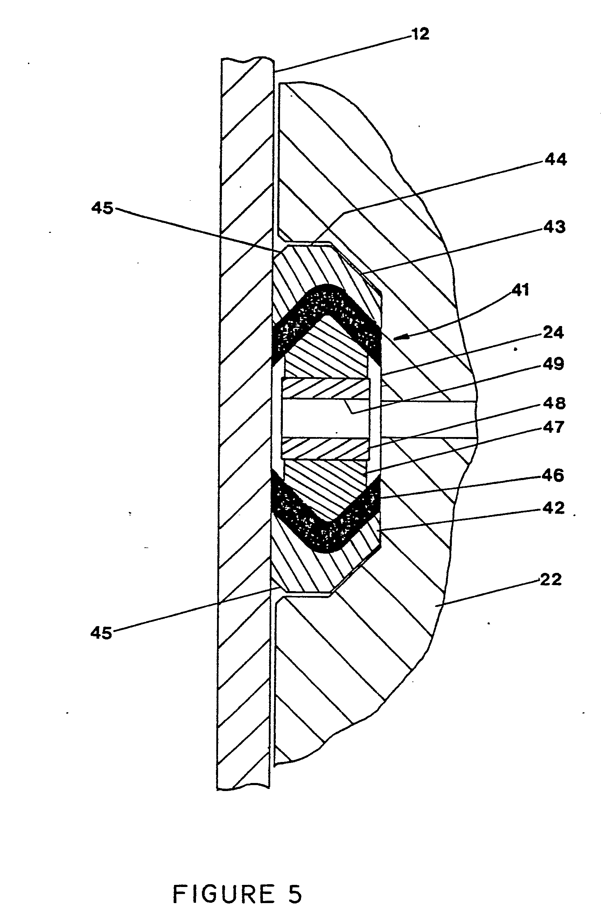

An alternate embodiment of a casing seal is depicted in Figure 5. This casing seal shown generally at 41 is colloquially known as a plastic loaded vee or "PLV" type seal. It acts as a replacement for the first casing seal 23 under severe and extreme pressure operating conditions and is mounted at the same position within a bushing recess 24 in the bushing 22, which recess, however, is modified as depicted in Figure 5.

The PLV type seal 41 comprises seven components. The axially outwardmost located components are back-up rings 42. The back-up rings 42 have their axially outwardly located end surfaces machined in the same general configuration as the bushing recess 24. A first bevelled portion 43 extends radially inwardly and axially outwardly from the outside surface of the casing seal 41 to the axially outwardmost portion of the end surfaces. Thence, the end surface has a radially inwardly extending portion 44 which terminates adjacent the inside diameter of the bushing 22. A second bevelled portion 45 extends radially and axially inwardly and terminates adjacent the outside diameter of the casing 12.

Flexible vee rings 46 are positioned axially inwardly of the back-up rings 42 and extend between the radial outside diameters of the bushing recess 24 and the casing 12.

Adaptor rings 47 are located axially inwardly of the flexible vee rings 46 and have wedge shaped end surfaces adjacent the flexible vee rings 46. A spacer ring 48 is centrally located and positioned axially inwardly of the adaptor rings 47. It includes a series of radial peripheral passageways 49 to allow injection of plastic material. The spacer ring 48 also has a radial cut therein (not shown) to allow installation of the spacer ring 48 in the bushing recess 24.

In operation, it will first be assumed that the outer diameter of the casing 12 is relatively smaller than the inside diameter of the tubing spool 16. In this case, the bushing 22 is required between the casing 12 and the tubing spool 16. It will further be assumed that the first casing seal 23 is a GS type seal as shown in Figure 3 and that the bushing seal is a B type seal 25 as shown in Figure 4.

Both the GS type casing seal 23 and the B type bushing seal 25 are continuous and are, therefore, snap fitted into their respective recesses 24, 26 in the bushing 22 and the tubing spool 16, respectively. After the casing 12 is cut to the appropriate length above the casing head 14, the tubing spool 16 together with the bushing 22, GS type casing seal 23 and B type bushing seal 25 will be installed over the casing 12 and connected to the flange of the casing head 14. If a bevelled edge 50 (Figure 2) of the casing 12 strikes one of the first transition areas 31 of the casing seal 23 during installation, the casing seal 23 will be guided over the casing by that transition area 31 and is not likely to be damaged or forced outside the bushing recess 24 because of the configuration of the first transition area 31 and the increased strength provided by the adjacent garter spring 35. As the seal 23 moves downwardly over the casing 12, the convex central protuberance 29 provides initial contact pressure against the casing 12 and sets the initial seal between the casing 12 and the bushing 22. In addition, because of a certain degree of allowable radial movement between the casing seal 23 and the inside diameter of the recess 24 (Figure 2), the casing seal 23 will maintain the initial seal with the casing 12 despite relative movement of the casing 12 as installation proceeds.

The B type bushing seal 25 is used between the tubing spool 16 and the bushing 22 because both the bushing 22 and the tubing spool 16 are manufactured with closer tolerance and surface finish control than is possible with the fit between the casing 12 and the bushing 22 and, accordingly, the possibility of the bushing seal 25 extruding from the tubing spool recess 26 or being damaged during installation is minimal.

After the installation of the tubing spool 16, the tubing hanger 19 is threaded onto the complementary threaded end portion 18 of the tubing 11 and is mounted within the tubing spool 16. The ring gasket 21 is positioned on the upper end of the tubing spool 16 and the mating bonnet 20 is mounted thereon. The mating bonnet 20 has two 8 type bushing seals 25b installed in suitable bonnet recesses 51, again because of the tolerance and machining control possible between the tubing hanger 19 and the mating bonnet 20.

When axial well pressure is applied by fluid or gas between the casing 12 and the bushing 22 to the casing seal 23, the convex central protuberance 29 will prevent the gas or fluid from passing and it will flow around the seal 23 displacing the upstream flexible retaining flange 34 and permitting the fluid to flow into the groove 33. This forces the surface areas 30 against the casing 12 and also forces the downstream flexible retaining flange 34 and forces the end surface 32 adjacent thereto against the end wall of the bushing recess 24 thus completing the sealing effect.

When axial well pressure is applied to the bushing seal 25, the fluid or gas will initially flow into the cavity 36 (Figure 4) and through the peripheral passageways 38 which will force the flexible retaining lips 40 to constrict inwardly against the casing 12 and the flexible retaining flanges 52 to move axially against the end walls of the tubing spool recess 26 thus completing the sealing effect.

Plastics material may be injected to further enchance sealing in the event that the surface of the casing 12 is damaged or deeply scratched. The plastics is injected through connections 53, 54 in the tubing spool 16 (Figure 2). The injected plastics passes from the connections 53, 54 and associated passageways 55, 56, into each tubing spool recess 26, and through the peripheral passageways 38 in each bushing seal 25. Thence, the plastics flows into the radial periphery in each bushing recess 24 outside each casing seal 23. The pressure from the injected plastics material provides a strong radial force on the casing seal 23 and also acts against the flexible retaining flanges 34. The plastics will similarly act within the cavity 36 and around the outside surface 39 of the bushing seal 25, forcing the flexible retaining lips 40 to constrict inwardly against the casing 12 and forcing the flexible retaining flanges 52 against the end walls of the tubing spool recess 26 thus enhancing the sealing effect.

For severe service or extreme well pressure conditions or where the surface conditions of the well casing 12 are exceptionally poor, the GS casing seal 23 may be replaced with a PLV type casing seal 41 (Figure 5). In this case, the bushing recess 24 will be shaped so as closely to conform to the shape of the PLV seal 41. The back-up rings 42, the flexible vee rings 46 and the adaptor rings 47 are all continuous and are inserted into their operating position in the bushing recess 24. The spacer ring 48, however, has a radial cut which allows it to be inserted after installation of the back-up rings 42, the vee rings 46 and the adaptor rings 47.

Plastics injection is also used with the PLV type seal 41. The plastics material will be injected into the connections 53, 54 and flow as earlier described into the bushing recesses 24. The plastics material will act axially outwardly on the flexible vee rings 46 · which, in turn, will act axially outwardly on the back-up rings 42. Each first bevelled portion 43 of the back-up rings 42 will act against its complementary bevelled portion on the bushing recess 24 which creates a wedging effect forcing the back-up rings 42 and, therefore, the fitted vee rings 46 against the surface of casing 12. This creates an enhanced sealing force. The back-up rings 42 are moved inwardly towards the casing 12 and are, therefore, in close contact therewith. This contact will bridge any radial clearance between the casing 12 and the PLV type seal 41 through which portions of the flexible vee rings 46 could otherwise be extruded by high pressure.

When the outside diameter of the casing 12 closely matches the inside diameter of the tubing spool 16, a bushing will not be required and each tubing spool recess 26 will carry a respective casing seal 23 which will act directly between the tubing spool 16 and the casing 12.

A type B bushing seal 25b may be mounted in each of the bonnet recesses 51 in the mating bonnet 20 (Figure 1). This is appropriate since the seal 25b is bridging the gap existing between the tolerance controlled surfaces of the mating bonnet 20 and the tubing hanger 19. If it is desired to use plastics injection to enhance the sealing, the plastics is injected through connections 57, 58 and respective passageways 59, 60. The plastics passes into the B type bushing seal 25b and, as earlier described, the flexible retaining lips 40 and the flanges 52 are pressed against the outer diameter of the tubing hanger 19 and against the end walls of the bonnet recess 51 in the mating bonnet 20 thus creating an enhanced sealing effect.

## Claims

1. A wellhead sealing system comprising a casing (12), a tubing spool 16) around the casing (12), a bushing (22) between the tubing spool (16) and the casing (12), a first bushing recess (24), a first tubing spool recess (26), a first casing seal (41) in the bushing recess (24) and a first bushing seal (25) in the tubing spool recess (26);
characterised in that the first casing seal (41) has an outside surface located generally at the outside diameter of the casing seal (41);
axially outwardmost back-up rings (42) having axially outwardly located end surfaces, said end surfaces being defined by a first bevelled portion (43) extending radially inwardly and axially outwardly from the outside surface of the casing seal (41) to an axially outwardmost portion of said end surfaces, a radially inwardly extending portion (44) terminating adjacent the inside diameter of the tubing spool (16) and a second bevelled portion (45) extending radially and axially inwardly and terminating adjacent the outside diameter of the bushing (22);
flexible vee rings (46) positioned axially inwardly of the back-up rings (42) and extending between the outside diameters of the bushing recess (24) and the bushing (22);
adaptor rings (47) positioned axially inwardly of the flexible vee rings (46) and having wedge shaped end surfaces adjacent the vee rings (46); and a centrally located spacer ring (48) positioned axially inwardly of the adaptor rings (47) and having a series of radial peripheral passageways (49) operable to allow injection of plastics material therethrough.

2. A wellhead seal characterised by cylindrical inside (27) and outside (28) surfaces located generally at the inside and outside diameters of the seal (23), respectively, and a radially inwardly extending convex central protuberance (29) on the cylindrical inside surface (27) between cylindrical flat surface areas (30) which extend axially outwardly from the convex central protuberance (29) into first transition areas (31) extending to respective end surfaces (32), the cylindrical outside surface (28) being defined by a circumferential centrally located groove (33) flanked by axially outwardly extending flexible retaining flanges (34) forming second transition areas between the cylindrical outside surface (28) and the end surfaces (32).

3. A wellhead seal according to claim 2, characterised by spring means (35) extending around the inside circumference of the seal adjacent each of the first transition areas (31).

4. A wellhead seal according to claim 3, characterised in that the means (35) are garter springs.

5. A wellhead seal characterised by an outside surface (39) located generally at the outside diameter of the seal (25), a circumferential central recess (36), a radially open inwardly extending circumferential entrance area (37) to the recess (36), and a plurality of radially extending peripheral passageways (38) between the outside surface (39) of the seal (25) and the recess (36).

6. A wellhead seal according to claim 5, characterised in that the outside surface (39) is defined by a circumferential centrally located groove flanked by axially outwardly extending flexible retaining flanges (52) forming second transition areas between the cylindrical outside surface (39) and end surfaces of the seal (25).

7. A wellhead seal characterised by:
an outside surface located generally at the outside diameter of the seal (41);
an inside surface located generally at the inside diameter of the seal (41);
back-up rings (42) having axially outwardly located end surfaces, each end surface being defined by a first bevelled portion (43) extending radially inwardly and axially outwardly from the outside surface of the seal to an axially outwardmost portion of the end surface, a radially inwardly extending portion (44) extending inwardly from the termination of the first bevelled portion (43), and a second bevelled portion (45) extending radially and axially from the termination of the portion (44) to adjacent the inside diameter of the seal (41);
flexible vee rings (46) positioned axially inwardly of the back-up rings (42) and extending between the outside and inside diameters of the seal (41);
adaptor rings (47) positioned axially inwardly of the flexible vee rings (46) and having wedge shaped end surface adjacent the vee rings (46); and
a centrally located spacer ring (48) positioned axially inwardly of the adaptor rings (47) and having a series of radial peripheral passageways (49) operable to allow injection of plastics material therethrough.

8. A wellhead sealing system characterised by a casing (12), a tubing spool (16) around the casing (12), a tubing spool recess (26) and a casing seal (25) in the tubing spool recess (26), the casing seal (25) comprising cylindrical inside and outside surfaces (27, 28) located generally at the inside and outside diameters of the seal (25), respectively, being defined by a radially inwardly extending convex central protuberance (29) on the cylindrical inside surface (27) between cylindrical flat surface areas (30) which extend axially outwardly from the convex central protuberance (29) into first transition areas (31) extending to respective end surfaces (32), the cylindrical outside surface (28) being defined by a circumferential centrally located groove (33) flanked by axially outwardly extending flexible retaining flanges (34) forming second transition areas between the cylindrical outside surface (28) and the end surfaces (32).

9. A wellhead sealing system according to claim 8, characterised by spring means (35) extending around the inside circumference of the seal (25) adjacent each of the first transition areas (31).

10. A wellhead sealing system comprising tubing (11), a tubing hanger (19) connected to the tubing (11), a tubing spool (16) supporting the tubing hanger (10), a mating bonnet (20) mounted on the tubing spool (16), a mating bonnet recess, and a tubing hanger seal (25), the tubing hanger seal (25) having an outside surface (39) lcoated generally at the outside diameter of the seal (25), a circumferential central recess (36), a radially open inwardly extending circumferential entrance area (37) to the recess (36), and a plurality of radially extending peripheral passageways (38) between the outside surface (39) of said seal and the recess (36).

11. A wellhead sealing system according to claim 10, characterised in that the outside surface (39) of the tubing hanger seal (25) is defined by a circumferential centrally located groove flanked by axially outwardly extending flexible retaining flanges (52) forming second transition areas between the cylindrical outside surface (39) and end surfaces of the seal (25).

EP 0 334 389 A2

FIGURE 1

FIGURE 2

EP 0 334 389 A2

FIGURE 3

FIGURE 4

FIGURE 5